# EUROPÄISCHE PATENTSCHRIFT

(11) **EP 0 568 874 B1**
(45) Veröffentlichungstag und Bekanntmachung des Hinweises auf die Patenterteilung: **08.09.1999**
(21) Anmeldenummer: 93106625.2
(22) Anmeldetag: 23.04.1993
(51) Int. Cl.: C09B 62/09, C09B 62/513, C09B 62/03

(54) **Reaktivfarbstoffe**
Reactive dyes
Colorants réactifs

(30) Priorität: 06.05.1992 DE 4214945
(43) Veröffentlichungstag der Anmeldung: 10.11.1993
(73) Patentinhaber: BAYER AG, 51368 Leverkusen (DE)
(72) Erfinder: Jäger, Horst, Dr., W-5090 Leverkusen 1 (DE); Stöhr, Frank-Michael, Dr., W-5068 Odenthal-Osenau (DE)

(56) Entgegenhaltungen:
- EP-A- 0 357 915

## Beschreibung

Die vorliegende Erfindung betrifft neue Reaktivfarbstoffe, ein Verfahren zu ihrer Herstellung und ihre Verwendung.

Reaktivfarbstoffe, die als Chromophor eine Azoverbindung von Naphthalinsulfonsäuren aufweisen, sind bereits bekannt aus EP-A-299 315, DE-A-1 644 208 und JP-A-61 272 269.

Aus EP-A 357915 sind Disazoreaktivfarstoffe auf Basis von 2-Amino-5-hydroxynaphthalin-7-sulfonsäure bekannt.

Die vorliegende Erfindung betrifft Reaktivfarbstoffe, die in Form der freien Säure folgender Formel entsprechen 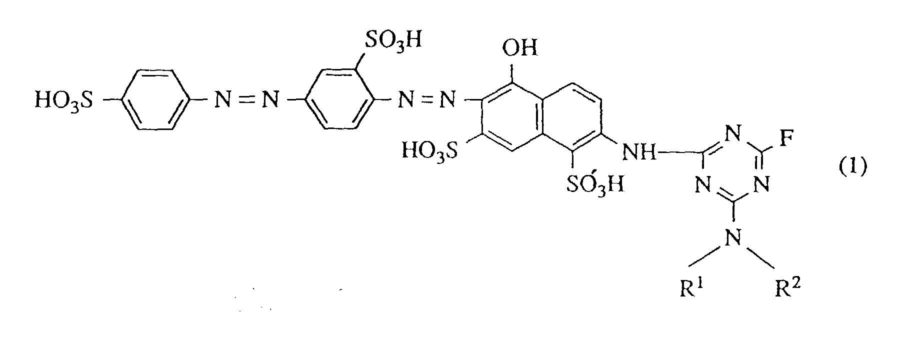 wobei
R¹ für Wasserstoff oder einen aliphatischen, cycloaliphatischen oder araliphatischen Rest und R² für einen unter R¹ angegebenen Rest oder einen Heteroarylrest oder einen gegebenenfalls substituierten Phenylrest steht, der frei ist von einer direkt an den Phenylrest gebundenen SO₂CH=CH₂- oder SO₂CH₂CH₂X-Gruppe, worin X eine alkalisch eliminierbare Gruppe wie Cl oder OSO₃H bedeutet und wobei die Reste R¹ und R² gegebenenfalls unter Einschluß eines weiteren Heteroatoms einen Ring bilden können.

Weitere Heteroatome zur Ringbildung von R² und R¹ sind bevorzugt O, NH, NCH₃, NCOCH₃, N-C₂H₄SO₂CH=CH₂, S, SO, SO₂.

Bevorzugte Heteroarylreste R² und R¹ sind 3-Aminosulfolan, 2-Aminothiazol, 6-Amino-2-ethylsulfonylbenzothiazol.

In einer bevorzugten Ausführungsform steht -NR¹R² für den Rest eines aliphatischen Amins oder eines heterocyclischen Amins, bei dem R¹ und R² zusammen mit dem gemeinsamen N-Atom einen Ring bilden.

Beispiele für Substituenten sind:
OH, Cl, F, COOH, SO₃H, OSO₃H, SO₂CH=CH₂, CN, SO₂CH₂CH₂Cl, SO₂CH₂CH₂OSO₃H, NR*-Z, wobei Z für eine heterocyclische Reaktivgruppe steht, insbesondere eine solche aus der Reihe der Monochlor- und der Monofluortriazinreihe oder der Fluorpyrimidinreihe.

Die cycloaliphatischen Reste R¹ sind insbesondere 5- oder 6-gliedrige Cycloalkylreste.

Die araliphatischen Reste R¹ sind insbesondere solche der Formel 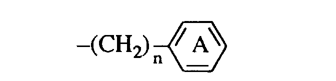 wobei n = 1-4 und der Rest A substituiert sein kann, beispielsweise durch Cl, NO₂, COOH, SO₃H, CH₃, OCH₃, SO₂CH₂CH₂OSO₃H, SO₂CH=CH₂, CH₂SO₂CH₂CH₂OSO₃H.

Beispiele für Substituenten der Phenylreste R² sind:
OCH₃, OC₂H₅, OCH₂CH₂OH, CH₃, C₂H₅, -CH(CH₃)₂, F, Cl, Br, COOH, SO₃H, NO₂, CH₂SO₂CH₂CH₂OSO₃H, CH₂SO₂CH=CH₂, NHZ.

Im einzelnen sind für R¹ bzw. R² = aliphatischer Rest folgende Beispiele aufgeführt:
CH₃, C₂H₅, CH₂CH₂OH, CH₂CH₂OCH₃, CH₂CH₂OC₂H₅, CH₂CH₂OCH₂CH₂OH,
CH₂SO₃H, CH₂CH₂SO₃H, CH₂CH₂OSO₃H, CH₂COOH, CH₂CH₂COOH,
CH₂CH₂SO₂CH₂CH₂OSO₃H, CH₂CH₂OCH₂CH₂SO₂CH₂CH₂Cl,
CH₂CH₂OCH₂CH₂SO₂CH=CH₂, CH₂CH₂NHCOCH₂CH₂COOH,
CH₂CH₂CH₂SO₂CH₂CH₂OSO₃H, CH₂CH₂CH₂SO₂CH=CH₂,
CH₂CH₂CH₂SO₂CH₂CH₂Cl,

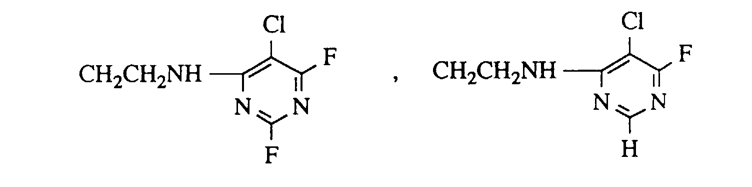

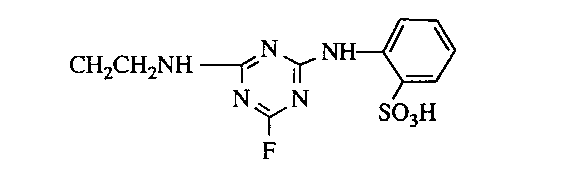

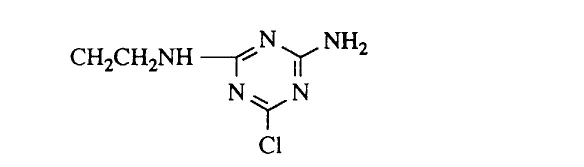

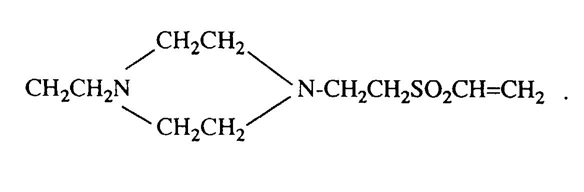

Beispiele für cycloaliphatische Reste R¹ bzw. R² sind:

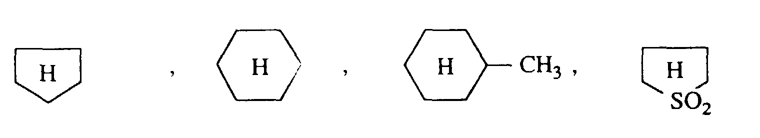

Araliphatische Reste R¹ sind beispielsweise

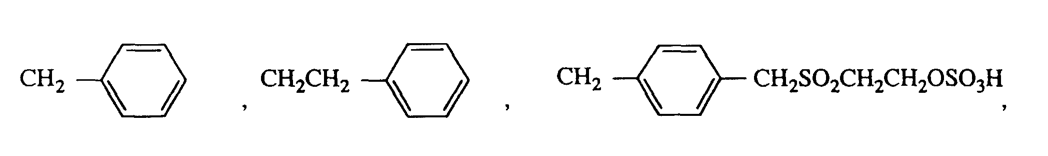

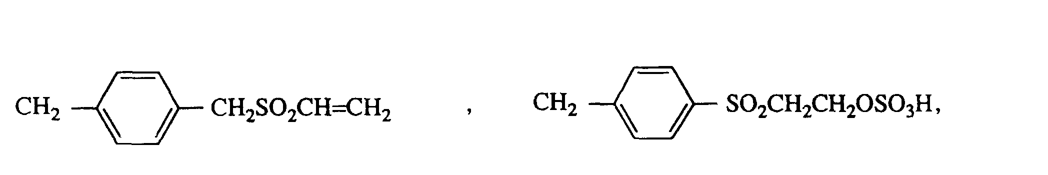

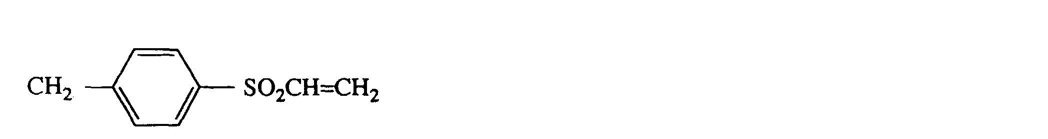

Als Beispiele für Phenylreste R² seien folgende aufgeführt:

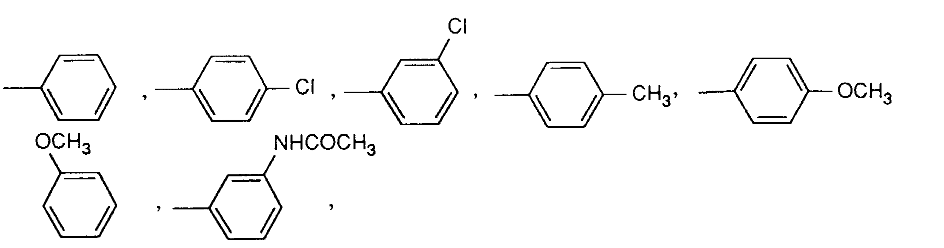

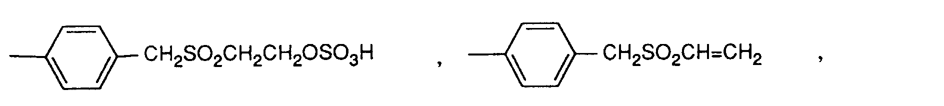

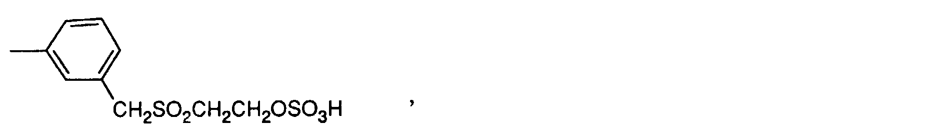

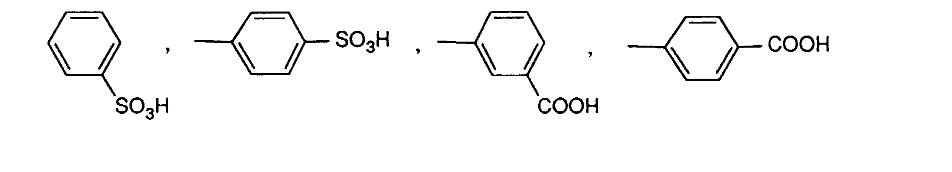

Beispiele für ringgeschlossene Reste 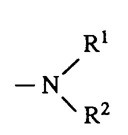 sind:

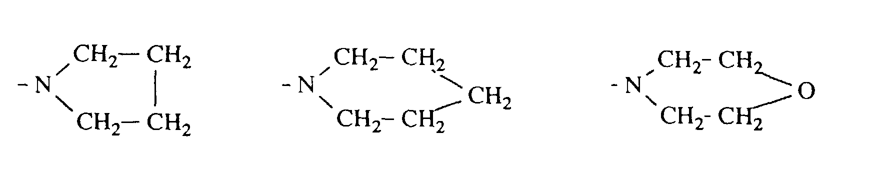

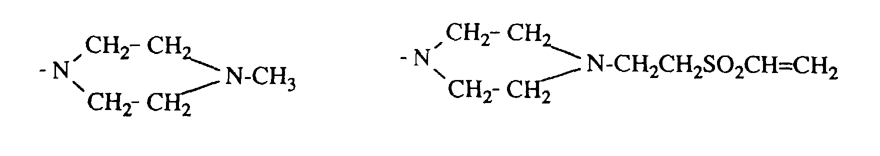

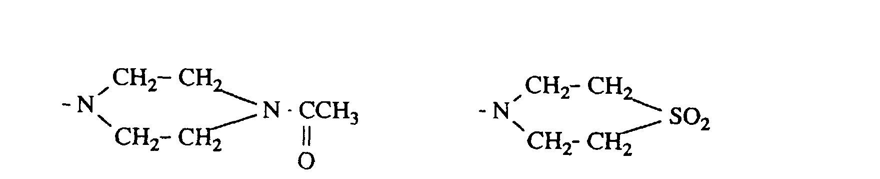

Bevorzugte Verbindungen im Rahmen der Formel (1) sind solche Verbindungen, in denen R¹ und R² unabhängig voneinander

Wasserstoff, C₁-C₄-Alkyl, das durch OCH₃, OC₂H₅, COOH, OSO₃H, SO₃H, OCH₂CH₂SO₂CH₂CH₂OSO₃H, OCH₂CH₂SO₂CH=CH₂, OCH₂CH₂SO₂CH₂CH₂Cl, SO₂CH₂CH₂OSO₃H, SO₂CH=CH₂ substituiert sein kann, bedeuten; in einer weiteren bevorzugten Ausführungsform bedeuten R¹ Wasserstoff oder C₁-C₄-Alkyl und R² einen Phenylrest, der durch Cl, OCH₃, CH₃, SO₃H, NO₂, COOH, CN, CH₂SO₂CH₂CH₂OSO₃H, CH₂SO₂CH=CH₂ substituiert sein kann; in einer weiteren bevorzugten Ausführungsform steht 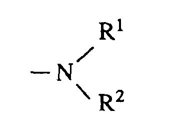 für den Rest eines ringeschlossenen Amins, insbesondere für

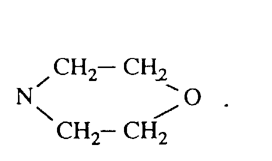

Gegenstand der Erfindung ist weiterhin ein Verfahren zur Herstellung der Farbstoffe der Formel (1), das dadurch gekennzeichnet ist, daß man zunächst 2-Amino-5-hydroxynaphthalin-1,7-disulfonsäure mit Trifluortriazin im pH-Bereich von 2-6, insbesondere 3-5 und bei Temperaturen von -5 bis +20°, insbesondere bei O°-5°, gegebenenfalls in Gegenwart eines Puffers zu einer Difluortriazinverbindung kondensiert und anschließend ein weiteres Fluoratom durch einen Aminrest NR¹R² austauscht und schließlich die resultierende Monofluorverbindung der Formel 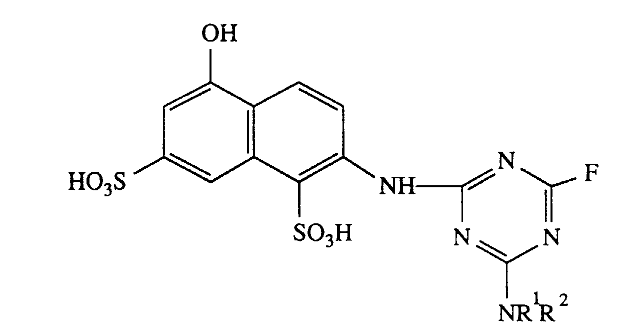 mit der Diazoverbindung eines Amins der Formel 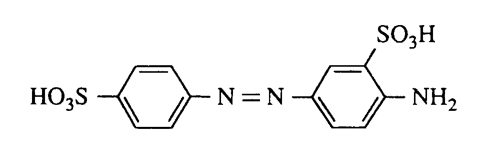 im neutralen Bereich kuppelt.

Als Puffer kommen insbesondere die Alkalisalze der Fluoride oder Phosphate infrage.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls durch Zugabe eines Puffer-Gemisches beispielsweise Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d.h. ohne Zwischenisolierung der Farbstoffe herstellen.

Die neuen Farbstoffe eignen sich zum Färben und Bedrucken von hydroxyl- und amidgruppenhaltigen Materialien, insbesondere Cellulosematerialien. Sie zeichnen sich durch eine hohe Reaktivität und einen hohen Fixiergrad aus. Die mit diesen Farbstoffen erhältlichen Färbungen oder Drucke auf Cellulosematerialien zeichnen sich außerdem durch eine hohe Faser-Farbstoff-Bindungsstabilität sowie durch eine hervorragende Stabilität gegenüber Oxidationsmitteln, wie peroxyd- oder chlorhaltige Waschmittel, aus. Die Auswaschbarkeit der beim Färben oder Druck nur in geringerem Maße entstehenden Hydrolyseprodukte ist ausgezeichnet. Die Farbstoffe besitzen gute Naßechtheiten.

Die angegebenen Formeln sind die der freien Säuren. Bei der Herstellung werden im allgemeinen die Salze erhalten, insbesondere die Alkalisalze, wie Natrium-, Kalium- oder Lithiumsalze.

Die in den Beispielen genannten Gewichte beziehen sich auf die freien Säuren. Die in den Beispielen angegebenen Farbkennzahlen beziehen sich auf Colour Index Hue Indication Chart (Indicator Numbers).

### Beispiel 1

31,9 g 2-Amino-5-hydroxy-naphthalin-1,7-disulfonsäure werden in 400 ml Wasser neutral gelöst. Man gibt dann 300 g Eis hinzu und läßt 8,8 ml Trifluortriazin einlaufen, wobei man mit 15 %iger Sodalösung einen pH von 4,0-4,5 einhält. Man rührt 5 Minuten nach gibt dann 8,7 g Morpholin hinzu und hält mit 15 %iger Sodalösung einen pH von 7,5-8. Nach 10 Minuten bei 10°C ist die Reaktion beendet. Das Reaktionsprodukt der Formel 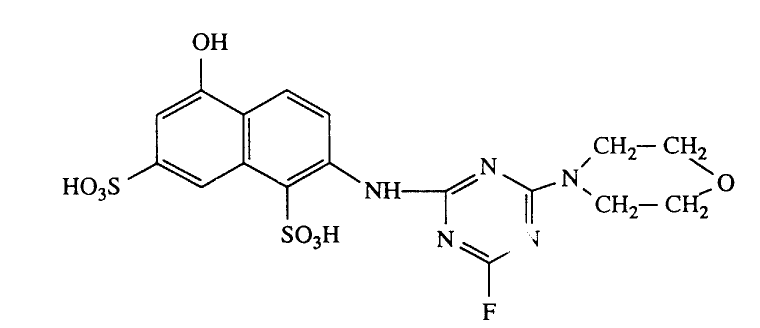 ist zum Teil ausgefallen.

Diese Suspension wird bei 5-10° mit einer auf üblichen Weg durch direkte Diazotierung von 35,7 g 1-Amino-azobenzol-2,4'-disulfonsäure erhaltenen Diazoverbindung versetzt, wobei gleichzeitig der pH durch Einstreuen von Natriumhydrogencarbonat bei pH 7,0-7,5 gehalten wird. Nach beendeter Kupplung wird der Farbstoff der Formel 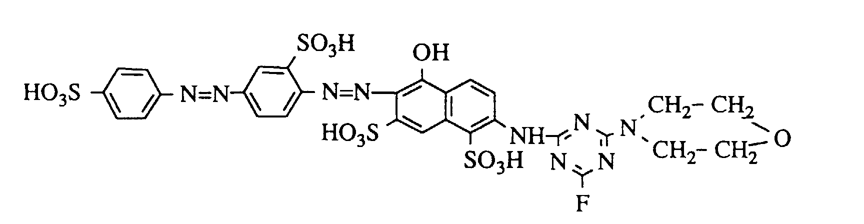 ausgesalzen, abgesaugt, getrocknet und gemahlen. Das rote Farbstoffpulver löst sich leicht in Wasser und färbt Baumwolle nach einem der für Reaktivfarbstoffe üblichen Verfahren in einem klaren gelbstichigen Rot (Farbkennzahl 7).

Weitere wertvolle Farbstoffe, die Baumwolle in brillanten gelbstichig roten Tönen färben, erhält man nach den Angaben von Beispiel 1, wenn man anstelle von Morpholin eine äquivalente Menge der nachfolgend aufgeführten Amine verwendet.

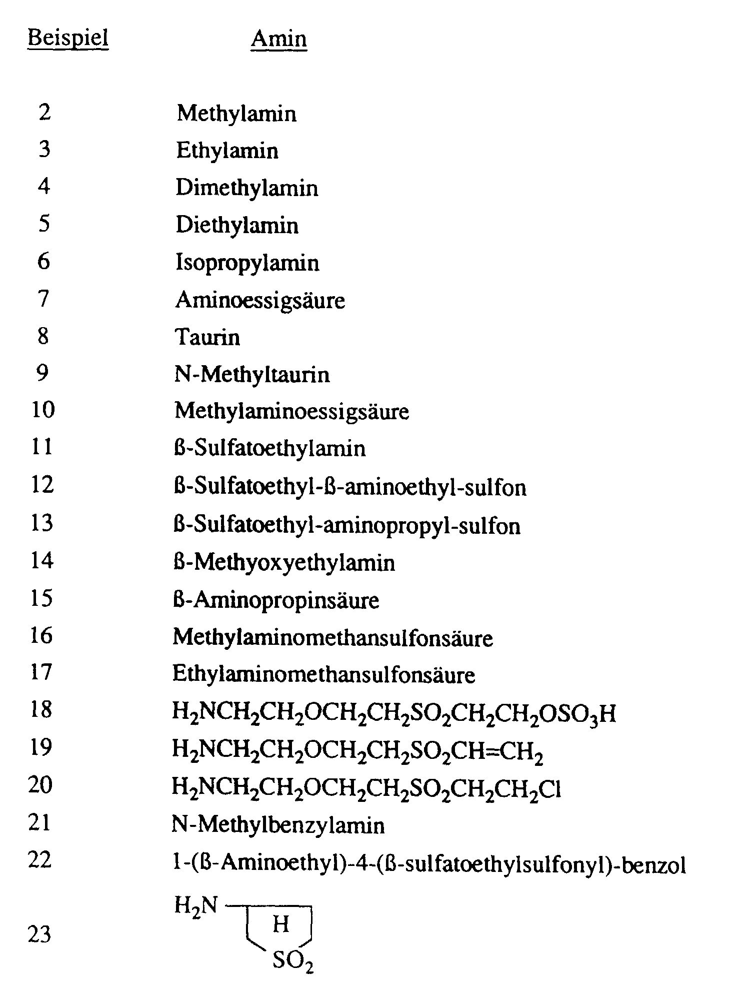

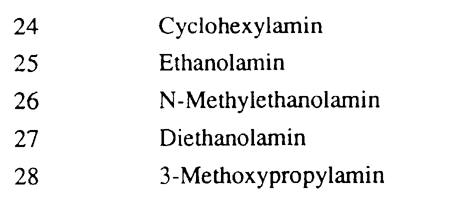

### Beispiel 29

31,9 g 2-Amino-5-hydroxy-naphthalin-1,7-disulfonsäure werden in 400 ml Wasser neutral gelöst. Man gibt dann 300 g Eis hinzu und läßt 8,8 ml Trifluortriazin einlaufen, wobei man mit 15 %iger Sodalösung einen pH von 4,0-4,5 einhält. Man rührt 5 Minuten nach und gibt dann eine neutrale Lösung von 17,3 g m-Sulfanilsäure zu und hält mit 15 %iger Sodalösung einen pH von 5,0-5,5. Während der Acylierung läßt man die Temperatur auf 15-20° ansteigen.

Die reusltierende Lösung des Reaktionsprodukt der Formel 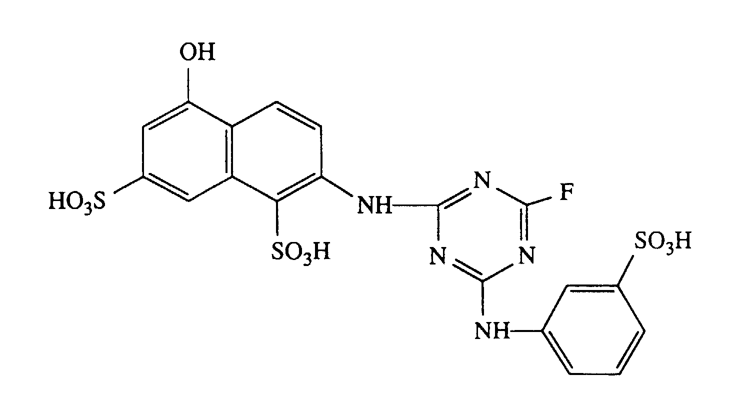 wird bei 5-10° mit einer auf üblichen Weg durch Diazotierung von 35,7 g 1-Aminoazobenzol-2,4'-disulfonsäure erhaltenen Diazoverbindung versetzt, wobei gleichzeitig der pH durch Einstreuen von Natriumhydrogencarbonat bei pH 7,0-7,5 gehalten wird. Nach beendeter Kupplung wird der Farbstoff der Formel 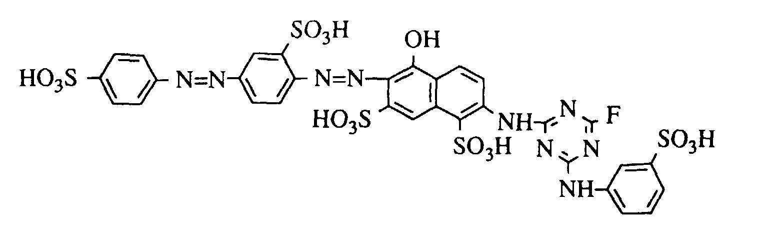 ausgesalzen, abgesaugt, getrocknet und gemahlen. Das rote Farbstoffpulver löst sich leicht in Wasser und färbt Baumwolle nach einem der für Reaktivfarbstoffe üblichen Verfahren in brillanten gelbstichigen Rottönen (Farbkennzahl 7).

Weitere wertvolle Farbstoffe, die Baumwolle in brillanten gelbstichig Rottönen färben, erhält man nach den Angaben von Beispiel 29, wenn man anstelle von m-Sulfanilsäure eine äquivalente Menge der nachfolgend aufgeführten Amine verwendet.

| Beispiel | Amin |
|---|---|
| 30 | Anilin |
| 31 | N-Ethylanilin |
| 32 | N-Methylanilin |
| 33 | 4-Chloranilin |
| 34 | 3-Chloranilin |
| 35 | 2-Chloranilin |
| 36 | o-Toluidin |
| 37 | p-Toluidin |
| 38 | p-Sulfanilsäure |
| 39 | o-Anisidin |
| 40 | p-Anisidin |
| 41 | β-Sulfatoethyl-4-aminobenzylsulfon |
| 42 | 3-Aminobenzoesäure |
| 43 | 4-Aminobenzosäure |

### Beispiel 44

31,9 g 2-Amino-5-hydroxy-naphthalin-1,7-disulfonsäure werden nach den Angaben von Beispiel 1 mit Trifluortriazin kondensiert Die Lösung der resultierenden Difluortriazinverbindung wird bei 0° mit 5,0 g Ethylendiamin versetzt, wobei man einen pH von 5,5-6,5 einhält. Nach 2 bis 3 Stunden ist die Kondensation beendet. Das Reaktionsprodukt der Formel 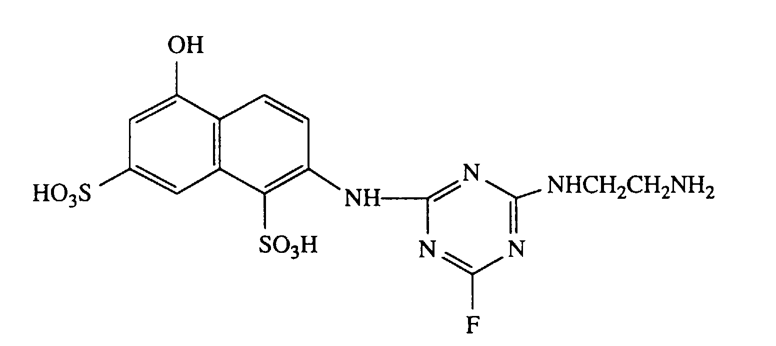 das weitgehend als Suspension vorliegt, wird mit einer auf üblichen Weg durch Diazotierung von 35,7 g 1-Amino-azobenzol-2,4'-disulfonsäure erhaltenen Diazoverbindung versetzt, wobei gleichzeitig der pH durch Einstreuen von Natriumhydrogencarbonat bei pH 7,0-7,5 gehalten wird. Nach beendeter Kupplung wird der Farbstoff der Formel 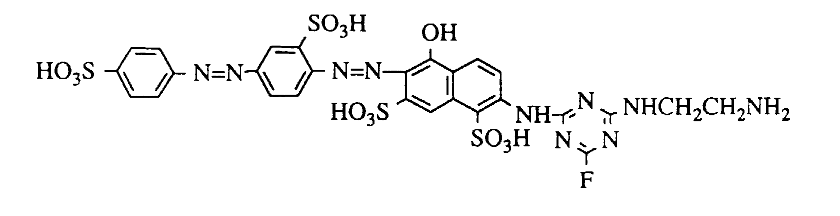 der sich schwer löslich abgeschieden hat, abgesaugt und erneut in 1 l Wasser angerührt. Bei 0-5° werden 16,9 g 2,4,6-Trifluor-5-chlor-pyrimidin zugetropft und dabei ein pH von 7,5-8,0 mit verdünnter Natronlauge eingehalten. Der Farbstoff geht während der Kondensation in Lösung. Nach beendeter Kondensation (Dünnschichtchromatogramm) wird der Farbstoff ausgesalzen, abgesaugt, getrocknet und gemahlen. Das rote Pulver löst sich leicht in Wasser und färbt Baumwolle in einem klaren gelbstichigen Rot (Farbkennzahl 7).

Weitere wertvolle Reaktivfarbstoffe, die Baumwolle gelbstichig rot färben, erhält man nach den Angaben dieses Beispiels, wenn man anstelle von 2,4,6-Trifluor-5-chlor-pyrimidin eine äquivalente Menge des nachfolgend aufgeführten Reaktivkomponenten verwendet und bei der Kondensation im angegebenen Temperaturbereich arbeitet.

| Beispiel | Reaktivkomponente | Temperatur |
|---|---|---|
| 45 | 4,6-Difluor-5-chlorpyrimidin | 10-15° |
| | | |
| 46 | 2,4-Dichlor-6-amino-triazin | 25-30° |
| | | |
| 47 | 2,4-Dichlor-6-(2-sulfophenylamino)-triazin | 25-30° |
| | | |
| 48 | 2,4-Dichlor-6-(2-sulfophenylamino)-triazin | 0-5° |
| | | |
| 49 | 2,4-Difluor-6-(2-chlor-5-sulfophenylamino)-triazin | 0-5° |
| | | |
| 50 | 2,4-Difluor-6-amino-triazin | 0-5° |

## Patentansprüche

1. Reaktivfarbstoffe, die in Form der freien Säure folgender Formel entsprechen 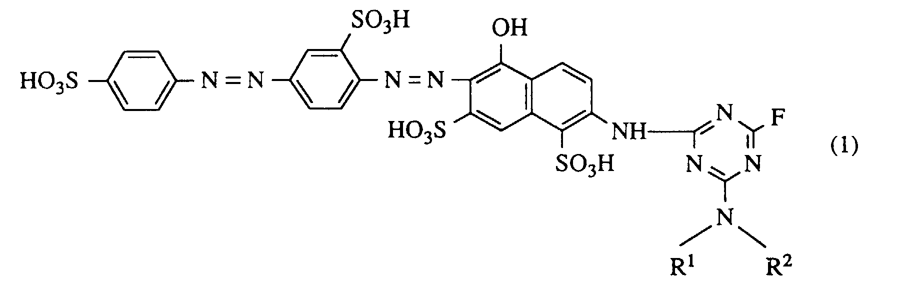 wobei
R¹ für Wasserstoff oder einen aliphatischen, cycloaliphatischen oder araliphatischen Rest
R² für R¹ oder einen Heteroarylrest oder einen gegebenenfalls substituierten Phenylrest steht, der frei ist von einer direkt an den Phenylrest gebundenen SO₂CH=CH₂- oder SO₂CH₂CH₂X-Gruppe,
X eine alkalisch eliminierbare Gruppe wie Cl oder OSO₃H bedeutet und
wobei die Reste R¹ und R² gegebenenfalls unter Einschluß eines weiteren Heteroatoms einen Ring bilden können.

2. Reaktivfarbstoffe nach Anspruch 1, dadurch gekennzeichnet, daß R¹ und R² unabhängig voneinander Wasserstoff, C₁-C₄-Alkyl, das durch OCH₃, OC₂H₅, COOH, OSO₃H, SO₃H, OCH₂CH₂SO₂CH₂CH₂OSO₃H,OCH₂CH₂SO₂CH=CH₂, OCH₂CH₂SO₂CH₂CH₂Cl, SO₂CH₂CH₂OSO₃H, SO₂CH=CH₂ substituiert sein kann, bedeuten.

3. Reaktivfarbstoffe nach wenigstens einem der vorhergehenden Ansprüche, dadurch gekennzeichnet, daß R¹ Wasserstoff oder C₁-C₄-Alkyl und R² einen Phenylrest bedeuten, der durch Cl, OCH₃, CH₃, SO₃H, NO₂, COOH, CN, CH₂SO₂CH₂CH₂OSO₃H, CH₂SO₂CH=CH₂ substituiert sein kann.

4. Reaktivfarbstoffe nach wenigstens einem der vorhergehenden Ansprüche, dadurch gekennzeichnet, daß R¹ und R² gegebenenfalls unter Einschluß eines weiteren Heteroatoms einen Ring bilden.

5. Reaktivfarbstoffe gemäß wenigstens einem der vorhergehenden Ansprüche, dadurch gekennzeichnet, daß wenigstens einer der Substituenten R¹ und R² einen Vinylsulfonreaktivrest enthält.

6. Reaktivfarbstoffe nach wenigstens einem der vorhergehenden Ansprüche, dadurch gekennzeichnet, daß R¹ eine heterocyclische Reaktivgruppe enthält.

7. Reaktivfarbstoff gemäß Anspruch 1 der Formel

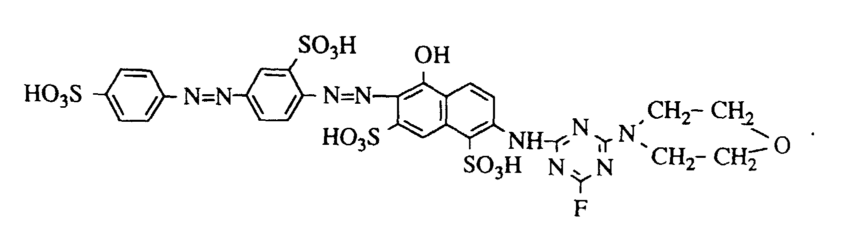

8. Verfahren zur Herstellung von Verbindungen der Formel (1) 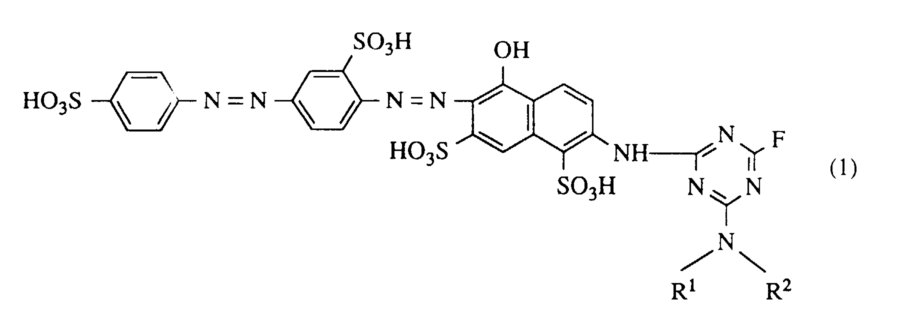 wobei
R¹ für Wasserstoff oder einen aliphatischen, cycloaliphatischen oder araliphatischen Rest
R² für R¹ oder einen Heteroarylrest oder einen gegebenenfalls substituierten Phenylrest steht, der frei ist von einer direkt an den Phenylrest gebundenen SO₂CH=CH₂- oder SO₂CH₂CH₂X-Gruppe,
X eine alkalisch eliminierbare Gruppe wie Cl oder OSO₃H bedeutet und
wobei die Reste R¹ und R² gegebenenfalls unter Einschluß eines Heteroatoms einen Ring bilden können, dadurch gekennzeichnet ist, daß man zunächst 2-Amino-5-hydroxynaphthalin-1,7-disulfonsäure mit Trifluortriazin im pH-Bereich von 2-6, und bei Temperaturen von -5 bis +20°, zu einer Difluortriazinverbindung kondensiert und anschließend ein weiteres Fluoratom durch einen Aminrest NR¹R² austauscht und schließlich die resultierende Monofluorverbindung mit der Diazoverbindung eines Amins der Formel 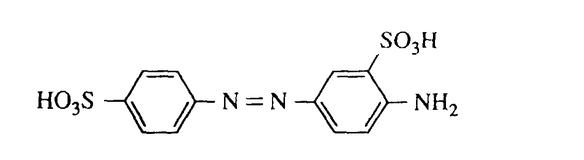 kuppelt.

9. Verfahren zum Färben oder Bedrucken von hydroxyl- oder amidgruppenhaltigen Materialien mit einem Reaktivfarbstoff, dadurch gekennzeichnet, daß ein Reaktivfarbstoff gemäß Anspruch 1 verwendet wird.

## Claims

1. Reactive dyestuffs which, in the form of the free acid, correspond to the following formula 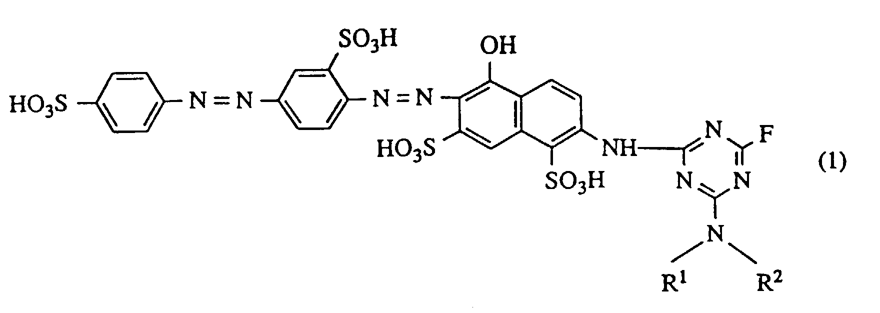 wherein
R¹ represents hydrogen or an aliphatic, cycloaliphatic or araliphatic radical,
R² represents R¹ or a heteroaryl radical or an optionally substituted phenyl radical which is free from an SO₂CH=CH₂ or SO₂CH₂CH₂X group attached directly to the phenyl radical,
X denotes a group, such as Cl or OSO₃H, which can be eliminated by alkali, and
wherein the radicals R¹ and R², optionally including a further hetero atom, can form a ring.

2. Reactive dyestuffs according to Claim 1, characterised in that R¹ and R² independently of one another denote hydrogen or C₁-C₄-alkyl which can be substituted by OCH₃, OC₂H₅, COOH, OSO₃H, SO₃H, OCH₂CH₂SO₂CH₂CH₂OSO₃H, OCH₂CH₂SO₂CH=CH₂, OCH₂CH₂SO₂CH₂CH₂Cl, SO₂CH₂CH₂OSO₃H or SO₂CH=CH₂.

3. Reactive dyestuffs according to at least one of the preceding claims, characterised in that R¹ denotes hydrogen or C₁-C₄-alkyl and R² denotes a phenyl radical which can be substituted by Cl, OCH₃, CH₃, SO₃H, NO₂, COOH, CN, CH₂SO₂CH₂CH₂OSO₃H or CH₂SO₂CH=CH₂.

4. Reactive dyestuffs according to at least one of the preceding claims, characterised in that R¹ and R², optionally including a further hetero atom, form a ring.

5. Reactive dyestuffs according to at least one of the preceding claims, characterised in that at least one of the substituents R¹ and R² contains a vinylsulphone reactive radical.

6. Reactive dyestuffs according to at least one of the preceding claims, characterised in that R¹ contains a heterocyclic reactive group.

7. Reactive dyestuff according to Claim 1, of the formula

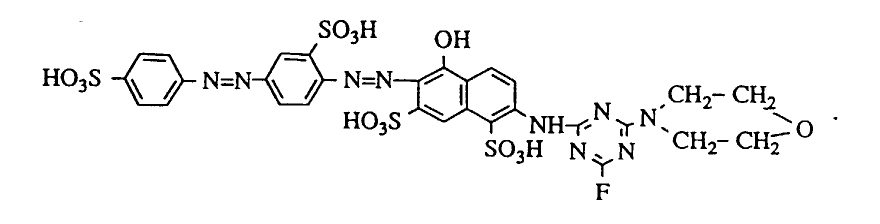

8. Process for the preparation of compounds of the formula (1) 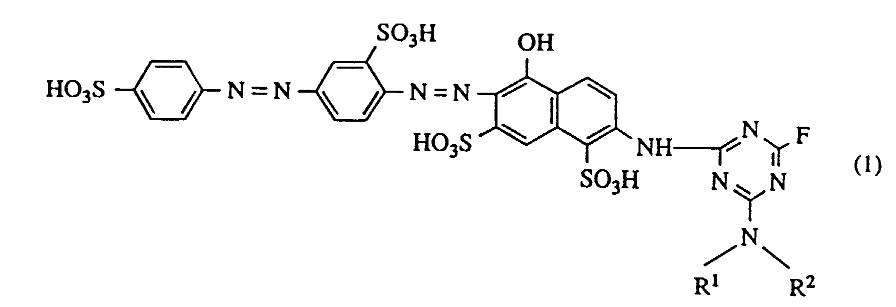 wherein
R¹ represents hydrogen or an aliphatic, cycloaliphatic or araliphatic radical,
R² represents R¹ or a heteroaryl radical or an optionally substituted phenyl radical which is free from an SO₂CH=CH₂ or SO₂CH₂CH₂X group attached directly to the phenyl radical,
X denotes a group, such as Cl or OSO₃H, which can be eliminated by alkali, and
wherein the radicals R¹ and R², optionally including a further hetero atom, can form a ring,
characterised in that 2-amino-5-hydroxynaphthalene-1,7-disulphonic acid is first subjected to a condensation reaction with tri-fluorotriazine in the pH range of 2-6, and at temperatures of -5 to +20°, to give a difluorotriazine compound, a further fluorine atom is subsequently replaced by an amine radical NR¹R², and, finally, the resulting monofluoro compound is coupled with the diazo compound of an amine of the formula

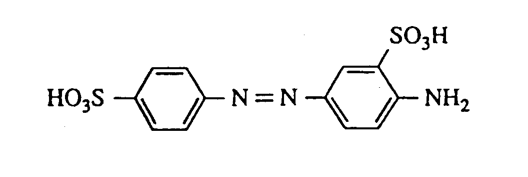

9. Process for dyeing or printing materials containing hydroxyl or amide groups with a reactive dyestuff, characterised in that a reactive dyestuff according to Claim 1 is used.

## Revendications

1. Colorants réactifs qui, à l'état d'acides libres, répondent à la formule suivante 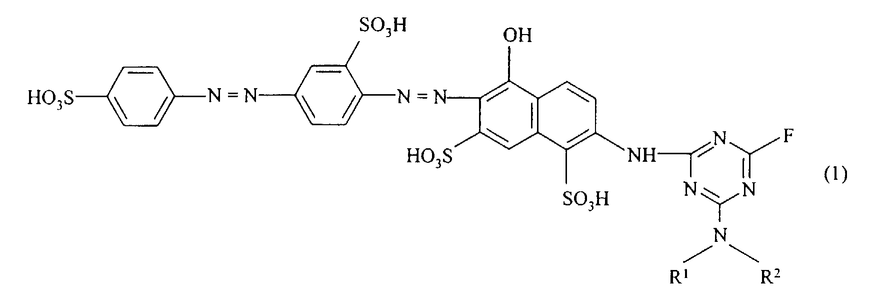 dans laquelle
R¹ représente l'hydrogène ou un radical aliphatique, cycloaliphatique ou araliphatique,
R² a l'une des significations indiquées pour R¹ ou représente un groupe hétéroaryle ou un groupe phényle éventuellement substitué mais exempt d'un groupe SO₂CH=CH₂ ou SO₂CH₂CH₂X relié directement à lui,
X représente un substituant éliminable en milieu alcalin tel que Cl ou OSO₃H et les groupes R¹ et R² peuvent former le cas échéant un cycle incluant un autre hétéroatome.

2. Colorants réactifs selon la revendication 1, caractérisés en ce que R¹ et R² représentent chacun, indépendamment l'un de l'autre, l'hydrogène, un groupe alkyle en C₁-C₄, éventuellement substitué par OCH₃, OC₂H₅, COOH, OSO₃H, SO₃H, OCH₂CH₂SO₂CH₂CH₂OSO₃H, OCH₂CH₂SO₂CH=CH₂, OCH₂CH₂SO₂CH₂CH₂Cl, SO₂CH₂CH₂OSO₃H, SO₂CH=CH₂.

3. Colorants réactifs selon au moins une des revendications qui précèdent, caractérisés en ce que R¹ représente l'hydrogène ou un groupe alkyle en C₁-C₄ et R² représente un groupe phényle qui peut être substitué par Cl, OCH₃, CH₃, SO₃H, NO₂, COOH, CN, CH₂SO₂CH₂CH₂OSO₃H, CH₂SO₂CH=CH₂.

4. Colorants réactifs selon au moins une des revendications qui précèdent, caractérisés en ce que R¹ et R² forment un cycle incluant éventuellement un autre hétéroatome.

5. Colorants réactifs selon au moins une des revendications qui précèdent, caractérisés en ce que l'un au moins des substituants R¹ et R² contient un groupe réactif vinylsulfone.

6. Colorants réactifs selon au moins une des revendications qui précédent, caractérisés en caractérisé en ce que R¹ contient un groupe réactif hétérocyclique.

7. Colorant réactif selon la revendication 1, de formule

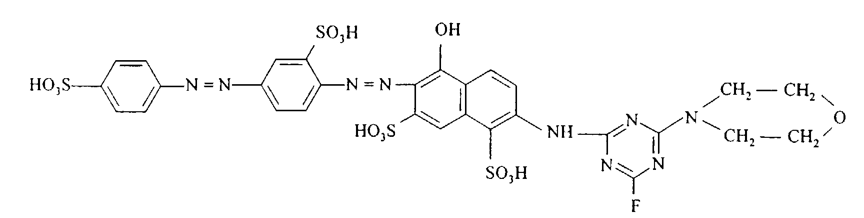

8. Procédé de préparation des composés de formule 1 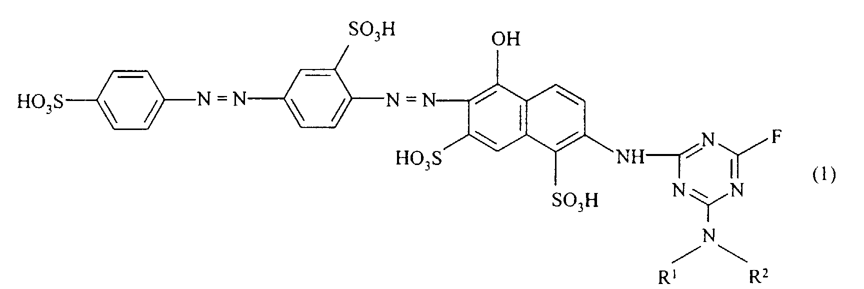 dans laquelle
R¹ représente l'hydrogène ou un radical aliphatique, cycloaliphatique ou araliphatique,
R² a l'une des significations indiquées pour R¹ ou représente un groupe hétéroaryle ou un groupe phényle éventuellement substitué mais exempt d'un groupe SO₂CH=CH₂ ou SO₂CH₂CH₂X relié directement à lui,
X représente un substituant éliminable en milieu alcalin tel que Cl ou SO₃H et les groupes R¹ et R² peuvent le cas échéant former un cycle incluant un hétéroatome, ce procédé se caractérisant en ce que l'on condense d'abord l'acide 2-amino-5-hydroxynaphtalène-1,7-disulfonique avec la trifluorotriazine dans l'intervalle de pH de 2 à 6 et à des températures de -5 à +20°C, ce qui donne un dérivé de difluorotriazine dans lequel on échange ensuite un autre atome de fluor contre un radical d'amine NR¹R², ce qui donne un dérivé monofluoré qu'on copule finalement avec le diazo d'une amine de formule

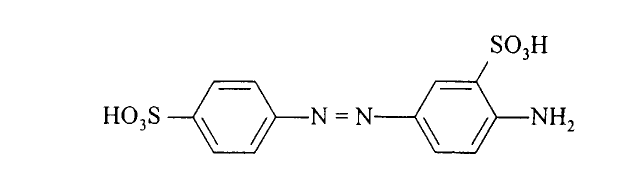

9. Procédé pour la teinture ou l'impression de matières contenant des groupes hydroxy ou amide à l'aide d'un colorant réactif, caractérisé en ce que l'on utilise un colorant réactif selon revendication 1.
